# EUROPEAN PATENT APPLICATION

(11) **EP 2 889 827 A1**
(43) Date of publication of application: **01.07.2015**
(21) Application number: 14199864.1
(22) Date of filing: 22.12.2014
(51) Int. Cl.: G06Q 40/04

(54) **Automatic electronic method for executing financial stock trading orders**

(30) Priority: 30.12.2013 IT TO20131078
(71) Applicant: Banca Akros SPA, 20149 Milano (IT)
(72) Inventor: GRILLI, TULLIO, I-20149 MILANO (IT)
(74) Representative: Vitillo, Giuseppe

(57) **Abstract**

Electronic method for executing stock trading orders, typically bond trading orders, comprising the steps of automatically verifying the actual feasibility of each order received, based on standard checks and specific checks requested by the generic interconnected user (COI), automatically requesting quotations made by pre-selected execution venues (PD), aggregating all quotations thus obtained and sorting them into a synthetic aggregate list of quotations based on the value of the already defined total consideration, sending the order to that execution venue which offers the best overall quotations (depending on the characteristics of the selected execution venue, the order may be of the AON (all or none) or RFQ (request for quotation) type), returning the executed order to the client, storing all previous steps into a database, possibly resorting to Manual Care (CM) or Automatic Care (CA) or Magnet (M), automatically calculating a behaviour coefficient for MR, MTFt and MTFa, automatically calculating, for each liquidity supplier, a coefficient defined as Execution Ratio.

## Description

The present invention relates to a system and a method comprising a plurality of electronic processing units and to an electronic method that can be used for automatically executing financial stock trading orders, e.g. bond trading orders, sent in a mode defined as "best execution".

Through the use of particular search criteria within said method, the present invention allows, in particular for bond stocks, extracting, identifying, classifying the best execution venues available and having them compete with each other, which venues belong to a set of predefined available venues collected by the electronic system into tables that are built and updated in real time.

Stock trading programs are currently available on the market which are essentially based on comparisons among the quotations that are present in a very limited number of execution venues having similar functional characteristics and the same classification; such programs also lack any further processing steps allowing automatic or manual execution of issued orders whenever the market conditions or the characteristics of the stock involved in the order will make it necessary. Moreover, such programs do not envisage any control method, also customizable on a user basis, for all trading orders sent, nor one or more methods for evaluating the interrogated execution venues.

In brief, the execution method or process consists of the following steps:
1. COI: automatically verifying the actual feasibility of each order received, based on standard checks and specific checks requested by the generic interconnected user.
2. PD: automatically requesting quotations made by the execution venues selected by the system; this step is defined as "price discovery" (PD) or quotation download; to the quotation made by each interrogated execution venue (in case of indirect connection), the costs for the indirect connection (if any) to the same execution venue are then added, thereby obtaining the so-called "Total Consideration".
3. BA: aggregating all quotations thus obtained and sorting them into a synthetic aggregate "book", defined as aggregate quotation list, based on the value of the already defined total consideration.
4. IO: sending the order to that execution venue which offers the best total consideration.
5. CS: accepting or rejecting the received "answer" after comparing it with the quotation given by the next execution venue in the previously built aggregate list.
6. REITERATION: possibly reiterating the previous steps, with the exception of the first step.
7. ER: returning the executed order to the user who sent the order, while creating the execution report.
8. PTA: recording all the previous steps into the system database, to which access may be allowed to the users and to the administrator of the system on a private site of the system itself.

The object of the present invention is an automatic electronic method for executing stock trading orders, in particular bond trading orders, as described above and in the appended claim 1.

The features and peculiarities of the present invention will be specified and highlighted in detail in the exemplary and nonlimiting description that follows and in the annexed drawings, wherein:

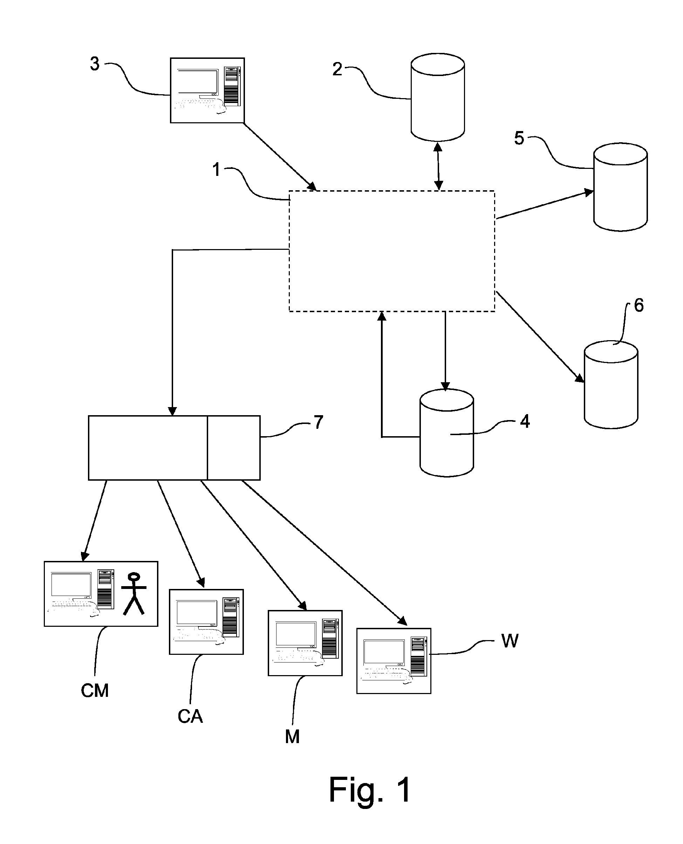

- Figure 1 is a block diagram of the electronic system according to the present invention;

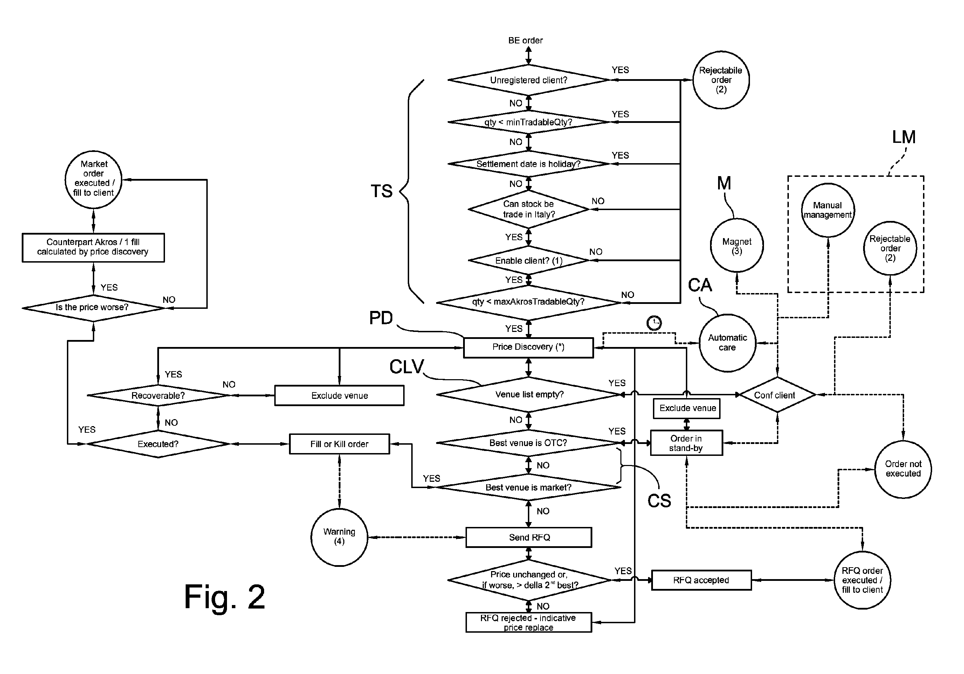

- Figure 2 shows the flow algorithm of the execution program implemented in the electronic system of the invention;

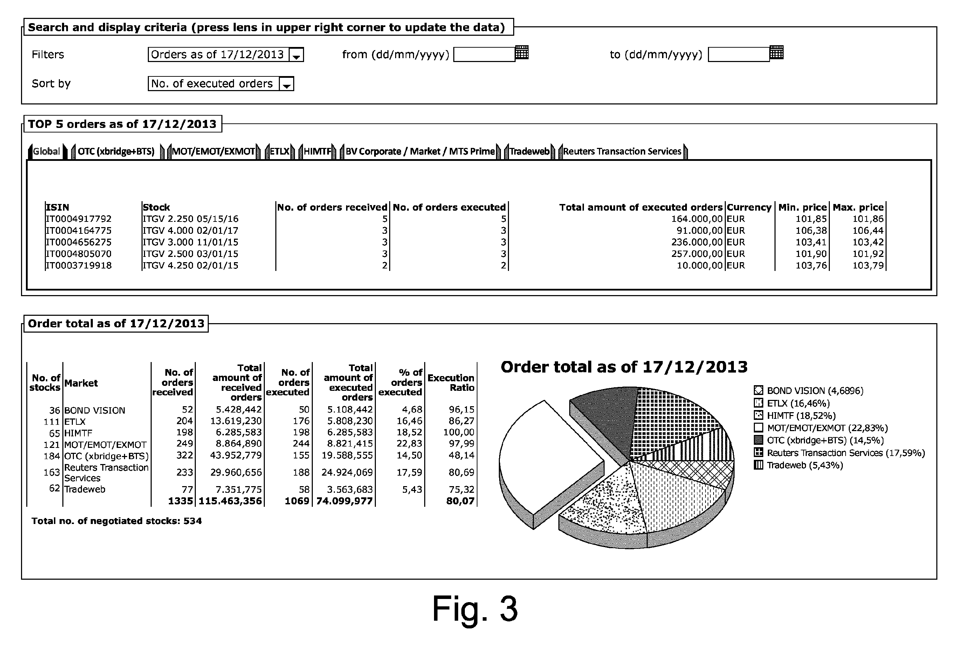

- Figure 3 shows the main data relating to a generic day of use of the system;

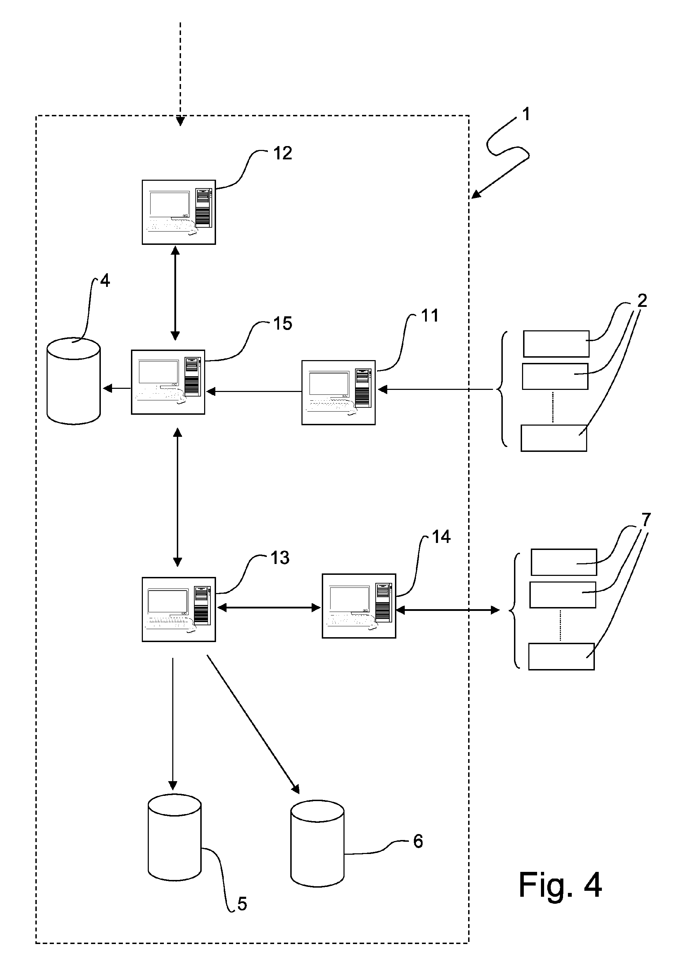

- Figure 4 illustrates in detail the electronic units of the system of Figure 1.

With reference to the annexed drawings, the system according to the present invention comprises at least one electronic processing unit 1 that receives financial stock trading orders in electronic format from clients 3. Said unit communicates with other external processing units, from which, through data banks (generally defined as "market" 2), obtains the availability of financial stocks to be negotiated.

The processing carried out by such units generates a list of possible electronic orders 4 on selected markets, while also generating real trading orders and the lists of executed orders 5 and sorted lists 6 of preferential markets whereon an order has been executed.

Said unit comprises a plurality of electronic means exchanging information with each other, e.g. pertaining to financial stock trading orders. In particular, unit 1 comprises means for receiving, processing and storing 11 quotations from one or more financial stock trading markets and means for receiving electronic financial stock trading orders 12 from operators/clients. Unit 1 further comprises means for generating 13 trading orders to be sent to the generic market and for decoding and normalizing the quotations of the execution venues. Said means for generating orders communicate with an interface 14 for translating the orders towards market 7.

According to the present invention, said unit includes means for processing 15 the list of possible electronic orders 4; for each execution venue and for each order received, the following basic information is requested:
- Price.
- Quantity.
- Time of the last update.
- Settlement date.

Also according to a feature of the present invention , means for generating orders 13 generate lists of executed orders 5 and sorted lists 6 of preferential markets whereon an order has been executed.

The automatic electronic method for executing financial stock trading orders envisages, in a first step, a plurality of preliminary verifications during which it is verified, upon receiving the trading order that has been sent, that standard filters (i.e. filters applied to orders sent by all interconnected users) are passed, such as, for example:
- Registered client.
- Client enabled to operate the system.
- Order quantity greater than the minimum negotiable quantity for the stock involved in the order.
- Order settlement date other than a holiday.
- Stock involved in the order negotiable by investors residing in Italy or Europe.
- Order quantity lower than the quantity filter set for the system.

Therefore, during the first step the system verifies the actual feasibility of the order as concerns the characteristics of the client and of the stock involved.

The above-described checks represent some of the main standard filters that are applied to orders sent by each interconnected user. If at least one of said filters is not passed, the order will be blocked into the section defined as "rejectable orders"; only upon the user's authorization (typically provided by phone) the order will continue to the next step (quotation download). To the standard filters (the most important ones of which have been listed above), specific checks requested by a single user may be added, the most important ones will be described below:
- User order quantity greater than a specific threshold specified by the user.
- Order for stock that is not compliant with conditions required by the law, e.g. article 100 bis of law 262.
- Order for stock with a rating level below a specific threshold set by the user.
- Order for stock issued in a country not belonging to the OCSE.
- Order for stock issued by a specific issuer.

The activity of verifying the feasibility of each order sent to the system in accordance with standard filters and specific checks represents the first step of the automatic activity carried out by the system according to the present invention, and is defined as "Central Office of Information" (COI).

Following the preliminary verification step, step 2 is carried out, which is defined as quotation download (PD), and to which each order has access only if it has passed the previous step.

For each order received, the system requests the following information to all the selected execution venues connected thereto:
- Price.
- Quantity.
- Time of the last update.
- Settlement date.

In addition to the above information, other information typical of each execution venue may also be requested.

To the price received from each execution venue that has been reached, any indirect connection costs are then added, thereby obtaining the so-called Total Consideration, based on which the same execution venues will be sorted in the synthetic aggregate list of quotations built by the system (step 3 defined as BA).

If the aggregate list is not empty (CLV) and the best execution venue belongs to the category of controlled markets (MR) or of traditional MTF's (multilateral trading facilities, as defined by the MIFID Community Directive) (MTFt), the system will generate, in the next step 4 (defined as IO) an AON (All Or None) application which will be sent to the same execution venue; should the bid be rejected by the addressed execution venue, the system will return to the quotation download step and will build a new aggregate list.

If the aggregate list is not empty (CLV) and the best execution venue belongs to the category of alternative MTF's (MTFa), then the system will generate, in the next step 4 (defined as IO), an automatic request for quote (RFQa).

The "counter" received from the Market Maker (liquidity supplier who is a member of an MTFa) is then compared with the next quotation in the aggregate list (book) that has been built, and will be accepted if it turns out to be better than or equal to the latter (step 5, defined as CS); otherwise, the system will return to step 2 and will build a new aggregate list (step 6, defined as REITERATION).

If the aggregate list is not empty (CLV) and the best execution venue belongs to the category of OTC (Over The Counter) quotations, then the order will be set into the state defined as stand-by (waiting for processing), and in the next step 4 (defined as IO) an RFQ will be sent to the OTC (Over The Counter) liquidity supplier providing that quotation. The counter received is then compared with the next quotation in the aggregate list, and will be accepted if it turns out to be better than or equal to the latter (step 5, defined as CS); otherwise, the system will return to step 2 and will build a new aggregate list (step 6, defined as REITERATION).

If the aggregate list is empty (because no execution venue provides a quotation in line with the order characteristics, or because no execution venue provides a quotation for the stock involved in the order, or because the already applied/interrogated execution venues have answered with an unacceptable counter), the order will be automatically set into one of the following three statuses (step 5, defined as CS):
- Manual Care (MC): for stocks that are not listed on any MR or MTFt belonging to the list of execution venues selected by the system, the order is "taken care of" by an operator; allowed actions are: send back to system, send as not executed, send to Manual Management, send to Automatic Care.
- Automatic Care (AC): for stocks that are only listed on quote-driven MR's or MTFt's, or if the stock involved in the order cannot temporarily be negotiated on an order-driven MR or MTFt, or if the user has not subscribed to the Magnet service (described below), then the order will be automatically "taken care of" by the system by monitoring, at preset time intervals, the quotations of all accessible execution venues; allowed actions are: send back to system, send as not executed, send to Manual Management
- Magnet (M): for stocks listed on at least one order-driven MR or MTFt, if the user has subscribed to this service, the system will send a FAS (Fill And Store) order to the order-driven market that has been judged by the system as the most reliable one; the degree of reliability of execution venues where the order has not been placed may improve while the order stays at the chosen execution venue; the system may then decide to move the order, if not yet partially executed, to that execution venue which is now judged to be the most reliable one; the system operation just described is called "sweeping"; allowed actions are: send to system, send to Manual Management, stop execution.

The execution of an order in Manual Care status may only occur by switching to the Manual Management status, wherein the main data of the order being executed are entered. The latter status may also be arrived at from some of the previously described statuses: Rejectable Orders, Automatic Care, Magnet, Stand-by, in addition to the already mentioned Manual Care.

The last status into which an order can be sent by the system is called Warning; this is a safety status into which the orders may be sent by the system if any anomalies have been found during any one of the steps of the system's activity; the actions allowed in this status are: send back to system, manual management, send as not executed, force execution.

Step 7 (defined as ER) consists of returning to the user the executed order that may have been obtained at the end of steps 4,5,6 or from the Manual Management status.

Step 8 (defined as PTA) consists of storing the "history" of each order into the database of the system, accessible from the latter's private Internet section; said section is called PTA (Post Trade Activity). For each order sent to the system, the following data are stored and made verifiable:
- Details of the order sent.
- Details of the order executed.
- List of all execution venues interrogated.
- Aggregate book for each attempt.
- List of any excluded execution venues, including the specific reason.
- "Behaviour" of each execution venue to which the order has been sent.
- Status changes.

The present invention also relates to a method for "measuring" the behaviour of every type of execution venue accessible to the system, which will be described below:
- Calculation of a so-called performance indicator for each selected market (MR, MTFt and MTFa); said indicator is obtained as a "weighted" sum of the following factors: number and type of quoted stocks (high, average or low), the mean bid/ask spread (low, average or high), market type (order-driven, quote-driven or mixed), direct or broker access, any market subscription costs (subdivided into high, average or low), firm (certain) or indicative quotations. A score comprised between 6 and 1 is assigned to each one of the listed factors, depending on the quality of the single factor; such scores are then summed up to obtain the performance indicator for each execution venue.
- Calculation of a quality coefficient for each *liquidity supplier* on an MTFa and OTC, defined as "execution ratio"; said coefficient is the ratio between the number of orders executed and the number of orders received by each liquidity supplier.

## Claims

1. Electronic system for executing stock trading orders, e.g. bond trading orders, comprising an electronic processing unit that receives such orders from clients (3), translated into electronic format, said unit being in communication with other external processing units from which, through data banks (2), it obtains the availability of financial stocks to be exchanged, **characterized in that** said unit (1) comprises a plurality of electronic means exchanging information with one another, in particular it comprises
• means for receiving, processing and storing (11) quotations from one or more financial stock trading markets and means for receiving electronic stock trading orders (12) from clients (3).
• means for generating (13) trading orders (7) to be sent to a market, while also decoding and normalizing market quotations,
• means for generating and processing (15) a list of possible electronic orders (4) for each order received, which comprises at least the price, quantity, time of last update, and settlement date parameters.

2. System according to claim 1, wherein said means for generating orders (13) communicate with an interface (14) for translating orders (7) towards the market.

3. System according to claim 1, wherein said means for generating (13) generate lists of executed orders (5) and sorted lists (6) of preferential markets whereon an order has been executed.

4. Electronic method for executing stock trading orders, e.g. bond trading orders, comprising the following steps:
a) automatically verifying the actual feasibility of each order received, based on standard checks and specific checks requested by the generic interconnected user (COI),
b) automatically requesting quotations made by pre-selected execution venues (PD), and adding specific connection costs in case of indirect connection, thereby obtaining the so-called total consideration,
c) aggregating all quotations thus obtained and sorting them into a synthetic aggregate list of quotations based on the value of the already defined total consideration,
d) sending the order to that execution venue which offers the best total consideration; depending on the characteristics of the selected execution venue, the order may be of the AON i.e. all or none or RFQ i.e. request for quotation type,
e) accepting or rejecting the received "answer" after comparing it with the quotation given by the next execution venue in the previously built aggregate list,
f) possibly reiterating the previous steps, with the exception of the first step a),
g) returning the executed order to the user who sent the order.

5. Method according to claim 4, wherein step g) is followed by a step of storing all the previous steps into a database that is privately accessible to each user on an Internet site of the system.

6. Method according to claim 5, wherein, if at step e) of accepting or rejecting the order the aggregate list is empty, then the order will be set automatically into one of the following three statuses: Manual Care (MC), wherein the order is managed by an operator, Automatic Care (AC), wherein the order is automatically managed by the system by monitoring, at preset time intervals, the quotations of all accessible execution venues, Magnet service (M), wherein the system enters the order into the presumably most reliable "order-driven" execution venue, with the addition of the possibility of moving the order, if not partially executed, to another execution venue which is then considered to be more reliable.

7. Electronic method for automatically calculating a coefficient which is indicative of the behaviour of each MR, MTFt and MTFa using the execution method of claim 1, comprising the following steps:
• acquiring the number and type of quoted stocks (high, average or low), the mean bid/ask spread (low, average or high), the market type (order-driven, quote-driven or mixed), direct or broker access, any market subscription costs (subdivided into high, average or low), firm or indicative quotations,
• assigning to each one of said parameters a score comprised between a minimum and a maximum, based on the quality of the single factor;
• summing up all the assigned scores.

8. Electronic method according to claim 4, comprising the automatic calculation, for each liquidity supplier, of a coefficient defined as "execution ratio", obtained as a ratio between the number of orders executed and the number of orders received by each liquidity supplier.
